# FASCICULE DE BREVET EUROPEEN

(11) **EP 0 557 213 B1**
(45) Date de publication et mention de la délivrance du brevet: **28.08.1996**
(21) Numéro de dépôt: 93420065.0
(22) Date de dépôt: 11.02.1993
(51) Int. Cl.: F16B 5/07

(54) **Dispositif pour assembler l'une contre l'autre deux plaques rigides**
Vorrichtung zur Verbindung von zwei steifen Platten
Device for assembling two rigid plates to each other

(30) Priorité: 21.02.1992 FR 9202136
(43) Date de publication de la demande: 25.08.1993
(73) Titulaire: SCHNEIDER ELECTRIC SA, F-92100 Boulogne-Billancourt (FR)
(72) Inventeur: De Palma, François, F-38050 Grenoble Cédex 09 (FR); Berard, Joseph, F-38050 Grenoble Cédex 09 (FR)
(74) Mandataire: Hecké, Gérard

(56) Documents cités:
- EP-A- 0 326 324
- DE-A- 2 814 656
- FR-A- 2 657 128
- GB-A- 536 955
- GB-A- 831 824
- US-A- 4 514 104

## Description

La présente invention concerne de façon générale un dispositif pour assembler l'une contre l'autre deux plaques rigides sensiblement planes.

En construction mécanique, il est fréquent de devoir assembler deux plaques (ou tôles) en appliquant les deux plaques l'une contre l'autre et en les fixant rigidement l'une à l'autre à l'aide d'éléments de fixation quelconques, par exemple des boulons, des rivets, des agrafes, à l'aide d'un procédé de soudage par points, etc... Ces divers dispositifs ou procédés de fixation peuvent se classer en deux catégories : les dispositifs amovibles ou démontables tels que les boulons, et les dispositifs inamovibles ou indémontables tels que les rivets ou le soudage par points.

Lorsque l'assemblage est du type amovible ou démontable, il présente l'inconvénient qu'il nécessite l'emploi de pièces d'assemblage séparées, tels que des boulons. Lorsque l'on fixe deux plaques l'une contre l'autre à l'aide de boulons, les têtes des boulons dépassent de la surface externe des deux plaques, et cela constitue aussi un inconvénient. On peut remédier à cet inconvénient en effectuant un lamage ou fraisage dans l'épaisseur des plaques, mais cela nécessite des opérations complexes d'usinage, et l'assemblage présente une fragilité accrue si les plaques ont une faible épaisseur.

Pour réaliser un assemblage du type amovible ou démontable qui ne comporte pas de pièces d'assemblage séparées, on peut agencer de façon connue des plaques qui comportent certaines découpes et pliages de façon à ce qu'au moins une des plaques présente des parties en forme d'agrafes ou de crochets, ces crochets venant pincer la plaque opposée, de façon à assurer une fixation amovible d'une plaque contre l'autre. Cependant, les dispositifs de ce genre connus actuellement présentent l'inconvénient, soit de constituer un assemblage peu résistant mécaniquement, soit de constituer un assemblage trop complexe et onéreux, soit de comporter des éléments de l'assemblage qui dépassent de la surface externe d'au moins une des deux plaques assemblées l'une contre l'autre.

Le document GB-A-536 955 décrit un assemblage de deux plaques rigides dans lequel chaque plaque comprend une partie (14, 15) obtenue par une découpe en forme de U, cette partie étant relevée de façon inclinée, par une opération de pliage. Les deux parties relevées des deux plaques sont mises en face l'une de l'autre et s'enfilent mutuellement dans l'espace laissé par l'autre partie relevée. Un inconvénient de cet assemblage connu réside dans le fait que l'assemblage final des deux plaques implique une déformation plastique permanente des parties relevées afin de faire en sorte que les deux plaques viennent en contact l'une contre l'autre. Cependant l'assemblage ainsi obtenu est toujours indémontable du fait de la déformation plastique permanente nécessaire. D'autre part, la déformation plastique permanente fragilise l'assemblage parce que cette déformation plastique est produite au niveau des parties relevées qui constituent les éléments d'assemblage eux-même. D'autre part, la déformation plastique permanente doit être effectuée sur lieu même de l'assemblage et nécessite un accès de chaque côté des plaques à assembler, ce qui n'est pas toujours possible. Enfin, certains matériaux ne peuvent pas supporter de telles déformations trop localisées, ou d'autres matériaux traités en surface voient leur traitement de surface détérioré par ces déformations plastiques permanentes effectuées à la fin de l'opération d'assemblage.

Les documents GB-A 831.824 et EP-A 326.324 se rapportent à des dispositifs d'assemblage nécessitant des vis spéciales de fixation pour confirmer le maintien de l'assemblage.

Un objet de la présente invention consiste à proposer un dispositif pour assembler l'une contre l'autre deux plaques rigides sensiblement planes, ce dispositif n'utilisant pas d'élément de fixation supplémentaire et ne présentant pas de partie qui dépasse de la surface externe de l'une et l'autre des deux plaques lorsque ces plaques sont assemblées.

Un autre objet de la présente invention consiste à proposer un tel dispositif d'assemblage qui assure un assemblage très résistant mécaniquement.

Un autre objet de la présente invention consiste à proposer un tel assemblage qui puisse être conçu, soit en tant que dispositif d'assemblage amovible ou démontable, soit en tant que dispositif d'assemblage inamovible ou indémontable.

Selon une caractéristique essentielle de l'invention, un tel dispositif pour assembler l'une contre l'autre deux plaques rigides sensiblement planes comporte au moins l'une des plaques comprenant une zone s'étendant parallèlement au reste de la plaque avec un décalage correspondant à une valeur sensiblement égale à l'épaisseur (e) de la plaque, ladite zone étant appelée zone parallèle décalée, dispositif caractérisé en ce qu'il comporte une fenêtre découpée dans l'autre plaque et comprenant un bord (A-B) correspondant à une moitié du périmètre de la zone parallèle décalée, l'application des deux plaques l'une contre l'autre provoquant l'engagement d'une zone parallèle décalée d'une plaque dans la fenêtre de l'autre plaque, à la suite d'un mouvement de translation d'une plaque par rapport à l'autre, entraînant la superposition de la zone parallèle décalée pour constituer l'assemblage.

Selon l'invention, chaque plaque comporte au moins deux éléments d'assemblage sensiblement identiques, chacun de ces éléments d'assemblage étant constitué par une zone en forme de disque, coopérant avec une fenêtre de l'autre plaque ladite fenêtre étant limitée, d'un côté, par un bord (A-B) d'une moitié du périmètre de la zone en forme de disque .

Ces objets, caractéristiques et avantages, ainsi que d'autres de la présente invention seront mieux compris lors de la description détaillée d'exemples de réalisation qui va suivre, illustrée par les figures annexées parmi lesquelles :
la figure 1 est une vue en plan d'une plaque qui comporte un dispositif d'assemblage selon la présente invention ;
les figures 2, 3 et 4 sont des vues en coupe selon la ligne I-I de la figure 1 de deux plaques selon l'invention, ces figures correspondant respectivement à trois positions successives des plaques l'une par rapport à l'autre lors du processus d'assemblage des plaques ;
la figure 5 est une vue en perspective agrandie d'une partie du dispositif représenté sur les figures 1 à 4, cette partie constituant un cliquet ;
la figure 6 est une vue en plan d'une variante de réalisation d'un dispositif d'assemblage selon l'invention ;
la figure 7 est une vue en coupe selon la ligne II-II de la figure 6 de deux plaques présentées pour être assemblées ;
la figure 8 est une vue en plan d'encore un autre mode de réal isation d'un dispositif d'assemblage selon l'invention ;
la figure 9 est une vue en coupe selon la ligne III-III de la figure 8 de deux plaques présentées assemblées ; et
la figure 10 est une vue en coupe transversale d'un autre mode de réalisation de l'invention utilisé dans une application particulière de l'assemblage d'une traverse et d'un montant.

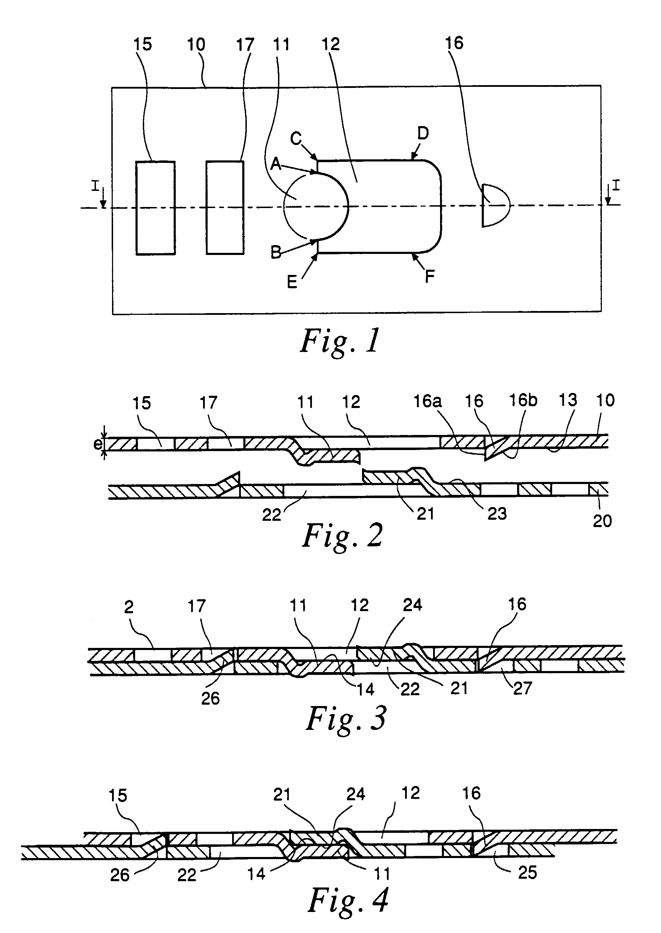

Sur la figure 1, on distingue une seule plaque ou tôle métallique 10 dans laquelle ont été réalisées des découpes et des déformations plastiques permanentes destinées à conférer à cette plaque des formes particulières qui constituent les éléments d'un dispositif d'assemblage selon l'invention. La plaque 10 qui est plane et d'épaisseur constante comporte plusieurs éléments de verrouillage qui sont réalisés uniquement par des découpes et des déformations plastiques de la plaque. Un seul élément de verrouillage est représenté sur la figure 1. Chaque élément de verrouillage est constitué par une zone 11 qui est parallèle au plan général de la plaque mais qui est décalée radialement du reste de la plaque d'une valeur de décalage qui est sensiblement égale à l'épaisseur de la plaque (on peut voir le décalage de la zone en forme de disque 11 sur la figure 2) Cette zone 11 sera appelée par la suite "zone parallèle décalée". Dans cet exemple de réalisation non limitatif, cette zone 11 est en forme de disque, et cette zone ayant la forme particulière d'un disque 11 sera appelée par la suite "zone en forme de disque".

L'élément d'assemblage comporte en outre un évidement ou une fenêtre 12 qui est découpé dans la plaque 10. Cette fenêtre 12 est limitée par :
1) un bord formé par une moitié du périmètre de la zone en forme de disque 11, ce demi-périmètre A-B s'étendant vers la droite sur la figure 1 entre les points A et B ;
2) deux bords formés par deux segments parallèles C-D et E-F dont une extrémité C et E de chacun est située respectivement au voisinage de l'une et l'autre des extrémités A et B du demi-périmètre A-B de la zone en forme de disque 11 ;
3) et un bord formé par une ligne courbe dont les extrémités D et F se confondent respectivement avec les deux segments C-D et E-F.

Le bord D-F et les deux bords parallèles forment ensemble une fenêtre dont les coins (au voisinage des points D et F) sont arrondis, afin de former une ouverture 12 de forme sensiblement oblongue.

Sur la figure 2, on distingue deux plaques 10 et 20 qui sont configurées de façon identique ou tout au moins très semblable. Par mesure de clarté, les éléments identiques présents pareillement sur les deux plaques portent respectivement des index de référence dont le chiffre des unités est le même (un chiffre différent pour chaque élément différent) et dont le chiffre des dizaines est 1 pour la plaque 10 et 2 pour la plaque 20.

Comme on peut le voir sur la figure 2, le décalage de la zone en forme de disque 11 par rapport à la face avant 13 de la plaque 10 est égal à l'épaisseur e de cette plaque 10. Les deux plaques 10 et 20 sont disposées l'une en face de l'autre de telle sorte que la face avant 13 de la première plaque 10 soit en regard de la face avant 23 de la seconde plaque 20.

Sur la figure 2, la plaque 20 est présentèe en face de la plaque 10 de telle sorte que la zone en forme de disque 21 de la plaque 20 se trouve en face de la fenêtre 12 de la plaque 10 et que simultanément la zone en forme de disque 11 de la plaque 10 se trouve en face de la fenêtre 22 de la plaque 20.

Ensuite, on rapproche les deux plaques pour les amener dans une position de contact mutuel, cette position correspondant à la figure 3. Dans cette position, la zone en forme de disque 21 de la plaque 20 est engagée dans la fenêtre 12 de la plaque 10 et simultanément la zone en forme de disque 11 de la plaque 10 est engagée dans la fenêtre 22 de la plaque 20. Bien entendu, la taille des fenêtres 12, 22 doit être suffisante pour permettre le libre passage des zones en forme de disque 21, 11.

Ensuite, on effectue un déplacement relatif d'une plaque par rapport à l'autre de telle sorte que les deux zones en forme de disque respectives 11 et 21 viennent se chevaucher, comme cela est représenté sur la figure 4. Dans cette position, la face arrière 24 de la zone en forme de disque 21 vient s'appliquer contre la face arrière 14 de la zone en forme de disque 11, ce qui assure l'assemblage des deux plaques. On peut obtenir facilement le désassemblage des deux plaques en effectuant les mouvements inverses des plaques l'une par rapport à l'autre.

Le dispositif d'assemblage selon l'invention permet d'auto-positionner les plaques à assembler l'une par rapport à l'autre.

Pour que l'assemblage selon l'invention soit plus efficace, il est préférable de constituer un système de verrouillage des deux plaques lorsque celles-ci sont assemblées, c'est-à-dire un système permettant d'immobiliser les deux plaques l'une par rapport à l'autre lorsque celles-ci sont dans la position assemblée (figure 4). Ce système de verrouillage, selon la présente invention, est constitué par au moins un évidement 15, 25 qui est ménagé dans les plaques 10, 20 et au moins une protubérance 26, 16 qui est ménagée sur les plaques 20, 10. Lorsque les deux plaques 10, 20 sont en position assemblée (figure 4), la protubérance 16 vient s'engager dans l'évidement 25 et simultanément la protubérance 26 vient s'engager dans l'évidement 15, afin de s'opposer au déplacement relatif dans le sens du désaccouplement d'une plaque par rapport à l'autre.

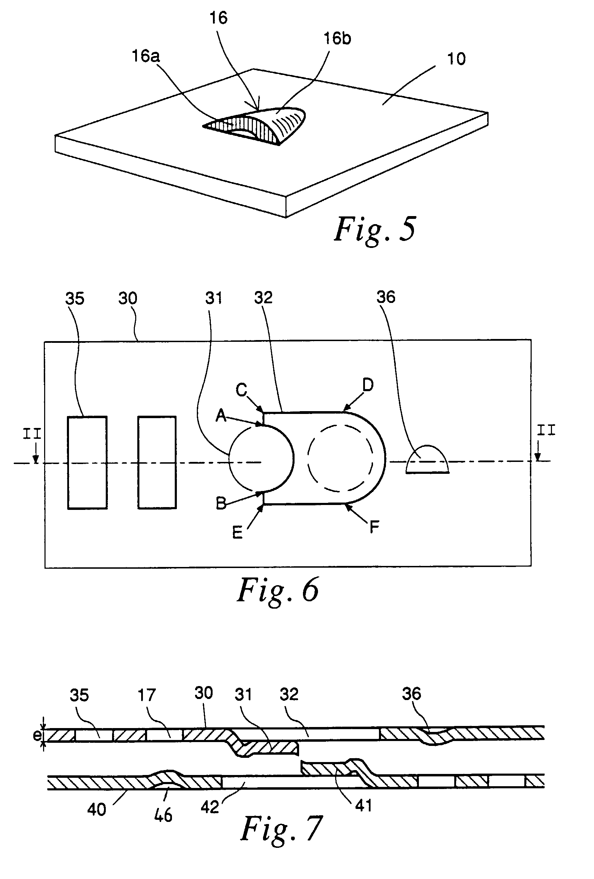

Comme cela est représenté sur la figure 5, la protubérance 16 peut être formée en constituant une découpe partielle 16a de la plaque 10 afin de constituer une protubérance présentant un flanc sensiblement perpendiculaire 16a et un flanc incliné 16b pour former un cliquet 16.

L'évidement 15, 25 peut être obtenu en ménageant une fenêtre ou un trou par poinçonnage de la plaque 10, 20. Dans ces conditions, les cliquets 16 et 26 viennent s'engager respectivement dans le trou 25 et 15 lorsque les plaques 20 et 10 sont décalées pour venir en position assemblée (figure 4), et le fait que chaque cliquet 16, 26 comporte une face d'appui (16a sur les figures 2 et 5) sensiblement perpendiculaire à la surface de la plaque 20 fait qu'il est pratiquement impossible de désassembler les deux plaques en appliquant simplement une force visant à faire glisser l'une des plaques par rapport à l'autre. Pour obtenir le désassemblage, il faut dans ce cas, écarter les deux plaques 10 et 20 dans les régions qui contiennent les dispositifs de verrouillage 25, 16 et 15, 26 afin de dégager les cliquets 16 et 26. Si les plaques sont suffisamment rigides ou si les cliquets sont suffisamment proéminents, l'assemblage selon l'invention peut devenir inamovible ou indémontable, dans le sens où un démontage entraînerait un endommagement ou une destruction de l'assemblage. Par contre, avec le même dispositif selon l'invention, on peut envisager un mode de réalisation dans lequel l'assemblage est amovible ou démontable ; il suffit pour cela que les plaques de l'assemblage soient suffisamment flexibles pour que l'on puisse désengager le cliquet sans endommager les plaques.

Pour faciliter l'opération d'assemblage, il est en outre prévu un second évidement 17 sur la plaque 10 et un second évidement 27 sur la plaque 20. Ces seconds évidements 17, 27 sont situés respectivement en face des cliquets 26, 16 de la plaque opposée lorsque les deux plaques 10, 20 sont rapprochées l'une contre l'autre pour venir dans la position représentée sur la figure 3. Ces seconds évidements 17, 27 permettent simplement de recevoir les cliquets opposés 26, 16 pour que les deux plaques 10, 20 puissent s'appliquer réellement l'une contre l'autre dans cette position de pré-assemblage représentée sur la figure 3.

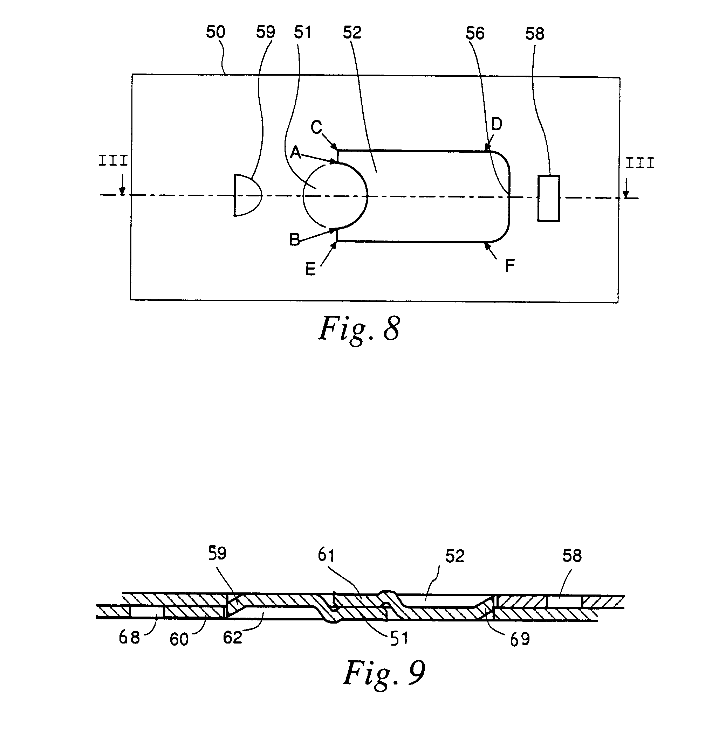

Dans une variante de réalisation (figures 6 et 7) les protubérances 36 et 46 peuvent présenter des surfaces inclinées de part et d'autre, ce qui permet de pouvoir assembler ou désassembler les deux plaques en appliquant simplement un effort visant à faire glisser l'une des plaques par rapport à l'autre.

Dans une autre variante de réalisation de l'invention, comme cela est représenté sur les figures 8 et 9, il est prévu deux plaques 50, 60 dont les formes sont identiques. Chaque plaque comporte un élément d'assemblage constitué par une zone en forme de disque 51, 61 et par une fenêtre 52, 62, ces éléments d'assemblage étant semblables à ceux qui ont été décrits précédemment en relation avec les figures 1 à 7. Cependant, chaque plaque 50, 60 comporte un seul évidement 58, 68 qui est situé à proximité du bord D-F de la fenêtre 52, 62, sur le côté opposé par rapport à la zone en forme de disque 51, 61. Chaque plaque 50, 60 comporte en outre une protubérance ou un cliquet 59, 69 qui est situé au niveau de la surface avant de la plaque, au voisinage de la zone en forme de disque 51, 61. Ainsi, comme on peut le voir sur la figure 9, lorsque les deux plaques 50, 60 sont en position assemblée, simultanément, les cliquets 59, 69 viennent se loger respectivement dans les fenêtres 62, 52 contre les bords D-F des fenêtres 62, 52 sur le côté opposé par rapport à la zone en forme de disque 61, 51. Lorsque les deux plaques 50, 60 sont en position de désassemblage (position non représentée), les deux cliquets 59 et 69 viennent simultanément se loger dans les deux évidements 68 et 58, et les deux plaques peuvent être aisément désassemblées en les écartant simplement l'une de l'autre.

Il est possible de ne prévoir qu'un seul dispositif de verrouillage pour plusieurs dispositifs d'assemblage.

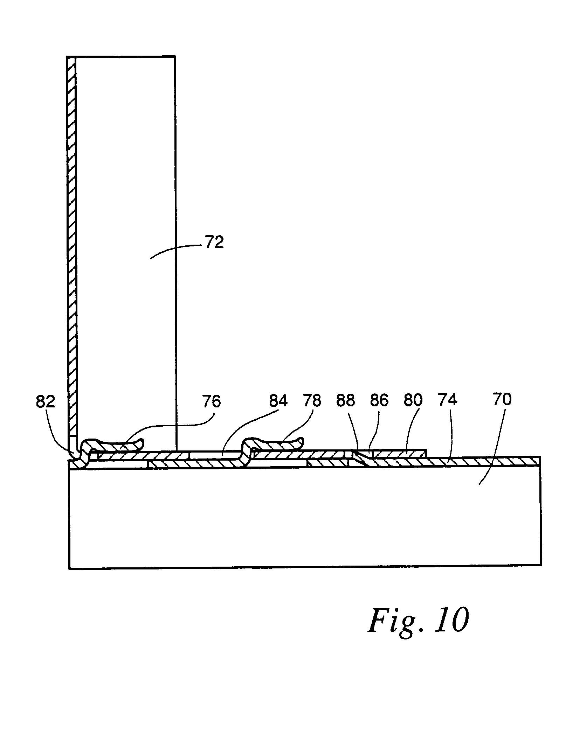

La figure 10 est une vue en coupe transversale d'un autre mode de réalisation de l'invention utilisé dans une application particulière de l'assemblage d'une traverse 70 et d'un montant 72, afin de constituer par exemple un châssis de tableau électrique d'une installation électrique. Dans ce mode de réalisation particulier de l'invention, on souhaite effectuer un assemblage verrouillable entre une traverse en tôle rigide 70 et un montant en tôle rigide 72. Les éléments d'assemblage selon l'invention tels que décrits précédemment en relation avec les figures 1 à 9 peuvent être utilisés selon une construction identique. Cependant, dans l'exemple représenté sur la figure 10, les éléments d'assemblage selon l'invention sont constitués différemment, d'une façon simplifiée, comme cela est décrit ci-après. Une partie plane horizontale 74 de la traverse horizontale 70 comprend deux zones 76, 78 obtenues par découpage et pliage et qui sont parallèles à la partie 74 et décalées de celle-ci d'une distance sensiblement égale à l'épaisseur de la partie 74. Ces zones 76, 78 sont appelées par la suite pareillement "zone parallèle décalée", comme précédemment. Le montant 72 comprend une languette 80 qui forme un prolongement plat horizontal du montant vertical 72. Cette languette 80 comprend deux fenêtres 82, 84 qui sont en regard des deux zones parallèles décalées 76, 78. Le montage s'effectue en appliquant la languette 80 contre la partie 74 de façon à ce que les zones 76, 78 traversent verticalement les fenêtres 82, 84, puis en déplaçant horizontalement la languette 80 de façon à faire passer les zones 76, 78 sur la partie 74 en formant un assemblage rigide. L'assemblage est complété par une autre fenêtre 86 ménagée dans la languette 80 et par une protubérance de verrouillage 88 formée dans la partie 74. Dans la position assemblée représentée sur la figure 10, la protubérance 88 s'engage dans la fenêtre 86 pour verrouiller l'assemblage. Ainsi, la traverse 70 est assemblée de façon verrouillée au montant 72.

## Revendications

1. Dispositif pour assembler l'une contre l'autre deux plaques rigides (10, 20) sensiblement planes au moins l'une des plaques comprenant une zone (11, 21) s'étendant parallèlement au reste de la plaque avec un décalage correspondant à une valeur sensiblement égale à l'épaisseur (e) de la plaque, ladite zone étant appelée zone parallèle décalée (11, 21), dispositif caractérisé en ce qu'il comporte :
. une fenêtre (12, 22) découpée dans l'autre plaque (10, 20) et comprenant un bord (A-B) correspondant à une moitié du périmètre de la zone parallèle décalée (11, 21), l'application des deux plaques (10, 20) l'une contre l'autre provoquant l'engagement d'une zone parallèle décalée (11, 21) d'une plaque dans la fenêtre (22, 12) de l'autre plaque, à la suite d'un mouvement de translation d'une plaque par rapport à l'autre, entraînant la superposition de la zone parallèle décalée (11, 21) pour constituer l'assemblage,
. une protubérance (16) agencée sur l'une des plaques (10) coopère avec un évidement (25) de l'autre plaque (20), de telle sorte que, lorsque les zones en forme de disque (11, 21) sont superposées pour constiuer l'assemblage des deux plaques, ladite protubérance (16) vient se loger dans ledit évidement (25) pour constituer un verrouillage qui s'oppose à un mouvement de translation d'une plaque par rapport à l'autre.

2. Dispositif selon la revendication 1, caractérisé en ce que chaque plaque comporte au moins deux éléments d'assemblage sensiblement identiques, chacun de ces éléments d'assemblage étant constitué par une zone (11, 21) en forme de disque, coopérant avec une fenêtre (12, 22) de l'autre plaque, ladite fenêtre étant limitée, d'un côté, par un bord (A-B) d'une moitié du périmètre de la zone en forme de disque (11, 21).

3. Dispositif d'assemblage selon la revendication 1, caractérisé en ce qu'au moins une des plaques (50) comporte en outre une protubérance (59) qui, lorsque les deux plaques sont en position assemblée, vient se loger dans la fenêtre (62) de l'autre plaque (60), contre un bord de ladite fenêtre qui est situé à l'opposé de ladite moitié (A-B) du périmètre de la zone parallèle décalée (61).

4. Dispositif d'assemblage selon l'une quelconque des revendications précédentes, caractérisé en ce que lesdites zones parallèles décalées sont des zones en forme de disque, et que ladite fenêtre (32, 42) desdites plaques (30,40) présente un bord en forme de demi-cercle (D-F) situé à l'opposé par rapport audit bord (A-B) d'une moitié du périmètre de la zone en forme de disque (31, 41).

5. Dispositif d'assemblage selon l'une quelconque des revendications précédentes, caractérisé en ce que lesdites plaques (10, 20 ; 30, 40 ; 50, 60) destinées à venir s'assembler comportent toutes deux des éléments d'assemblage (11, 12 ; 21, 22) formés de façon semblable ou identique sur les deux plaques.

6. Dispositif d'assemblage selon l'une quelconque des revendications précédentes, caractérisé en ce que lesdites plaques (10, 20 ; 30 , 40 ; 50, 60) destinées à venir s'assembler comportent toutes deux des éléments de verrouillage (15, 16 ; 25, 26) formés de façon semblable ou identique sur les deux plaques.

7. Dispositif d'assemblage selon l'une quelconque des revendications précédentes, caractérisé en ce que l'une des plaques (74) comporte des zones parallèles décalées (76, 78) coopérant avec des fenêtres coorespondantes (82, 84) de l'autre plaque (80).

8. Dispositif d'assemblage selon l'une quelconque des revendications précédentes, caractérisé en ce que l'une des plaques (74) constitue une partie d'une traverse (70) et l'autre plaque (80) constitue unepartie en prolongement repliée (80) d'un montant (72), la traverse et le montant étant destinés à constituer un châssis.

9. Dispositif d'assemblage selon l'une quelconque des revendications précédentes, caractérisé en ce que l'une des plaques est constituée par une partie (74) d'une traverse (70) d'un châssis et l'autre plaque est constituée par une languette (80) formant un prolongement replié à 90 ° d'un montant (72) du même châssis.

## Patentansprüche

1. Anordnung zur gegenseitigen Verbindung von zwei annähernd flachen biegesteifen Platten (10, 20), wobei mindestens eine der Platten einen, um ein annähernd der Dicke (e) der Platte entsprechendes Maß versetzten, parallel zum Rest der Platte verlaufenden Abschnitt (11, 21) aufweist, der als versetzter Parallelabschnitt (11, 21) bezeichnet wird, dadurch gekennzeichnet, daß sie
einen, in der anderen Platte (10, 20) ausgebildeten Fensterausschnitt (12, 22) mit einem, einer Hälfte der Umfangslinie des versetzten Parallelabschnitts (11, 21) entsprechenden Rand (A-B) aufweist, wobei das Aneinanderfügen der beiden Platten (10, 20) das Eingreifen eines versetzten Parallelabschnitts (11, 21) einer Platte in den Fensterausschnitt (22, 12) der anderen Platte und nach einer geradlinigen Bewegung einer der Platten in bezug auf die andere eine daraus resultierende Übereinanderlage der versetzten Parallelabschnitte (11, 21) zur Herstellung der Verbindung bewirkt, und
einen, in einer der Platten (10) ausgebildeten Vorsprung (16) aufweist, der mit einer Aussparung (25) der anderen Platte (20) zusammenwirkt, derart daß, wenn die beiden scheibenförmigen Abschnitte (11, 21) zur Bildung der Verbindung zwischen den beiden Platten übereinanderliegen, der genannte Vorsprung (16) in die genannte Aussparung (25) eingreift, um eine Verriegelung zu bilden, die eine geradlinige Verschiebung der beiden Platten gegeneinander verhindert.

2. Anordnung nach Anspruch 1, dadurch gekennzeichnet, daß jede Platte erfindungsgemäß mindestens zwei, annähernd identische Verbindungselemente aufweist, wobei jedes dieser Verbindungselemente aus einem scheibenförmigen Abschnitt (11, 12) besteht, der mit einem Fensterausschnitt (12, 22) der anderen Platte zusammenwirkt, und der genannte Fensterausschnitt auf der einen Seite durch einen, einer Hälfte der Umfangslinie des scheibenförmigen Abschnitts (11, 21) entsprechenden Rand (A-B) begrenzt wird.

3. Anordnung nach Anspruch 1, dadurch gekennzeichnet, daß mindestens eine der Platten (50) darüber hinaus einen Vorsprung (59) aufweist, der in der Verbindungsstellung der beiden Platten in den Fensterausschnitt (62), in Anschlag gegen denjenigen Rand des Fensterausschnitts gelangt, der der genannten halben Umfangslinie (A-B) des versetzten Parallelabschnitts (61) gegenüberliegt.

4. Anordnung nach irgendeinem der vorhergehenden Ansprüche, dadurch gekennzeichnet, daß die genannten versetzten Parallelabschnitte als scheibenförmige Abschnitte ausgebildet sind und daß der genannte Fensterausschnitt (32, 42) der genannten Platten (30, 40) einen halbkreisförmigen Rand (D-F) aufweist, der dem, einer Hälfte der Umfangslinie des scheibenförmigen Abschnitts (31, 41) entsprechenden genannten Rand (A-B) gegenüberliegt.

5. Anordnung nach irgendeinem der vorhergehenden Ansprüche, dadurch gekennzeichnet, daß beide genannten, zu verbindenden Platten (10, 20; 30, 40; 50, 60) Verbindungselemente (11, 12; 21, 22) aufweisen, die an beiden Platten die gleiche oder eine ähnliche Form aufweisen.

6. Anordnung nach irgendeinem der vorhergehenden Ansprüche, dadurch gekennzeichnet, daß beide genannten, zu verbindenden Platten (10, 20; 30, 40; 50, 60) Verriegelungselemente (15, 16; 25, 26) aufweisen, die an beiden Platten die gleiche oder eine ähnliche Form aufweisen.

7. Anordnung nach irgendeinem der vorhergehenden Ansprüche, dadurch gekennzeichnet, daß eine der Platten (74) versetzte Parallelabschnitte (76, 78) aufweist, die mit den zugeordneten Fensterausschnitten (82, 84) der anderen Platte (80) zusammenwirken.

8. Anordnung nach irgendeinem der vorhergehenden Ansprüche, dadurch gekennzeichnet, daß eine der Platten (74) einen Teil eines Querträgers (70) und die andere Platte (80) einen Teil einer umbogenen Verlängerung (80) eines Längsträgers (72) bildet, wobei der Querträger und der Längsträger dazu dienen, einen Trägerrahmen zu bilden.

9. Anordnung nach irgendeinem der vorhergehenden Ansprüche, dadurch gekennzeichnet, daß eine der Platten durch einen Teil (74) eines Querträgers (70) eines Trägerrahmens und die andere Platte durch eine Lasche (80) gebildet wird, die eine um 90° umbogene Verlängerung des Längsträgers (72) des gleichen Trägerrahmens (72) darstellt.

## Claims

1. A device for assembling two appreciably flat rigid plates (10, 20) one against the other, at least one of the plates comprising a zone (11, 21) extending parallel to the rest of the plate with an offset corresponding to a value appreciably equal to the thickness (e) of the plate, said zone being called parallel offset zone (11, 21), a device characterized in that it comprises :
a window (12. 22) cut out in the other plate (10, 20) and compnsing an edge (A-B) corresponding to a half of the perimeter of the parallel offset zone (11, 21), application of the two plates (10, 20) against one another causing engagement of a parallel offset zone (11, 21) of one plate in the window (22, 12) of the other plate, following a translation movement of one plate with respect to the other, resulting in superposition of the parallel offset zone (11, 21) to form the assembly,
a protuberance (16) arranged on one of the plates (10) cooperates with a recess (25) of the other plate (20), in such a way that, when the disk-shaped zones (11, 21) are superposed to constitute the assembly of the two plates, said protuberance (16) engages in said recess (25) to constitute a locking which opposes a translation movement of one plate with respect to the other.

2. The device according to claim 1, characterized in that each plate comprises at least two appreciably identical assembly elements, each of these assembly elements being constituted by a disk-shaped zone (11, 21) cooperating with a window (12, 22) of the other plate, said window being limited on one side by an edge (A-B) of one half of the perimeter of the disk-shaped zone (11, 21).

3. The assembly device according to claim 1, characterized in that at least one of the plates (50) comprises in addition a protuberance (59) which, when the two plates are in the assembled position, engages in the window (62) of the other plate (60), against an edge of said window which is situated opposite said half (A-B) of the perimeter of the parallel offset zone (61).

4. The assembly device according to any one of the above claims, characterized in that said parallel offset zones are disk-shaped zones, and that said window (32, 42) of said plates (30, 40) presents an edge in the form of a semi-circle (D-F) situated opposite said edge (A-B) of one half of the perimeter of the disk-shaped zone (31, 41).

5. The assembly device according to any one of the above claims, characterized in that said plates (10, 20; 30, 40 ; 50, 60) designed to be assembled to one another both comprise assembly elements (11, 12 ; 21, 22) formed in a similar or identical manner on both plates.

6. The assembly device according to any one of the above claims, characterized in that said plates (10, 20; 30, 40 ; 50, 60) designed to be assembled to one another both comprise locking elements (15, 16 ; 25, 26) formed in a similar or identical manner on both plates.

7. The assembly device according to any one of the above claims, characterized in that one of the plates (74) comprises parallel offset zones (76, 78) cooperating with corresponding windows (82, 84) of the other plate (80).

8. The assembly device according to any one of the above claims, characterized in that one of the plates (74) forms a part of a cross-member (70) and the other plate (80) forms a part of a folded extension (80) of an upright (72), the cross-member and upright being designed to form a frame.

9. The assembly device according to any one of the above claims, characterized in that one of the plates is formed by a part (74) of a cross-member (70) of a frame and the other plate is formed by a tab (80) forming an extension folded at 90° of an upright (72) of the same frame.
